# EUROPÄISCHE PATENTSCHRIFT

(11) **EP 1 565 066 B1**
(45) Veröffentlichungstag und Bekanntmachung des Hinweises auf die Patenterteilung: **09.01.2008**
(21) Anmeldenummer: 03755927.5
(22) Anmeldetag: 09.05.2003
(51) Int. Cl.: A23J 1/00

(54) **VERFAHREN ZUR GEWINNUNG EINES PROTEINISOLATS UND EINER FASERFRAKTION AUS EINER FASER- UND PROTEINHALTIGEN AUSGANGSSUBSTANZ**
METHOD FOR OBTAINING A PROTEIN ISOLATE AND A FIBRE FRACTION FROM A PARENT SUBSTANCE CONTAINING FIBRES AND PROTEIN
PROCEDE PERMETTANT D'OBTENIR UN ISOLAT DE PROTEINES ET UNE FRACTION FIBREUSE A PARTIR D'UNE SUBSTANCE DE DEPART CONTENANT DES FIBRES ET DES PROTEINES

(30) Priorität: 31.05.2002 DE 10224257
(43) Veröffentlichungstag der Anmeldung: 24.08.2005
(73) Patentinhaber: NEUMÜLLER, Waldemar, D-37077 Göttingen (DE)
(72) Erfinder: NEUMÜLLER, Waldemar, D-37077 Göttingen (DE)
(74) Vertreter: Rehberg Hüppe + Partner
(86) Internationale Anmeldenummer: PCT/EP2003/004867
(87) Internationale Veröffentlichungsnummer: WO 2003/101573

(56) Entgegenhaltungen:
- WO-A-00/49887
- WO-A-02/15712
- GB-A- 1 434 498
- US-A- 3 853 839
- US-A- 4 060 203
- US-A- 5 508 172

## Beschreibung

Die Erfindung bezieht sich auf ein Verfahren zur Gewinnung eines Proteinisolats und einer Faserfraktion aus einer faser- und proteinhaltigen Ausgangssubstanz.

Pflanzliche Eiweißträger stehen im Mittelpunkt vieler Überlegungen zur Deckung eines weltweit steigenden Bedarfs an funktionellen Proteinen und als Lieferant für funktionelle Ballaststoffe. Der Schwerpunkt des bisherigen Interesses lag dabei in der Regel nur auf der Eiweißfraktion, d.h. auf der Gewinnung eines Proteinisolats. Die begleitenden Fasern wurden ausschließlich als Reststoffe der Proteinisolatgewinnung und nicht als eigener Wertstoff angesehen. Seit gewisser Zeit finden aber auch die Fasern stärkere Beachtung, da sie sich durch ein hohes Wasserbindungsvermögen auszeichnen. Ein solches Wasserbindungsvermögen ist Voraussetzung für die Verwendung als diätetischer Ballaststoff. Eine bei der Proteinisolatgewinnung anfallende Faserfraktion kann aber nur bei einer ausreichenden Partikelstruktur und einer guten Sensorik Verwendung als Ballaststoff finden. Dabei ist eine Wechselwirkung zwischen der Partikelstruktur und der Sensorik der Faserfraktion gegeben. Wenn darauf geachtet wird, dass die Fasern eine grobe Struktur beibehalten, damit sie mittels üblicher Zentrifugiertechniken von extrahierten Proteinen abgetrennt werden können, bleiben in den Kapillaren der Fasern Proteine und Begleitstoffe zurück, die die Sensorik der Fasern beeinträchtigen. Typischerweise werden zur Abtrennung der Fasern von gelösten Proteinen mittels Zentrifugieren Partikel mit einer Größe von 200 bis 600 µm gewählt, die auch als Grits bezeichnet werden. Das Extrahieren der Proteine aus der Ausgangssubstanz wird typischerweise mit Hilfe eines alkalischen Lösungmittels bewirkt. Nach dem Abtrennen der alkalischen Lösung von der Faserfunktion werden die Proteine durch Säurezugabe an ihrem isoelektrischen Punkt ausgefällt. Dieses Ausfällen ist gegenüber anderen löslichen Begleitstoffen in gewissem Maß selektiv. Im Zusammenhang mit den in den Kapillaren der Fasern zurückbleibenden Proteinen und Begleitstoffen ist zu berücksichtigen, dass sich das effektive Aufnahmevolumen der Fasern für diese Stoffe durch eine Quellung der Fasern vergrößert.

Die zum industriellen Zentrifugieren eingesetzten Vorrichtungen sind sogenannte Dekanter. Allen Dekantem ist zu eigen, dass sie zwar hohe Feststoffkonzentrationen verarbeiten können, jedoch durch Lufteintrag einen Teil ihrer Trennleistung verlieren. Ein solcher Lufteintrag ist zusätzlich deshalb problematisch, weil der Luftsauerstoff unter den bei der alkalischen Extraktion gegebenen Bedingungen leicht zu einer Oxidation von ungesättigten Fettsäuren oder den in pflanzlichen Produkten immer vorhandenen Phenolen führt. D.h. es tritt eine Autooxidation ein, die zu einer sensorischen Verschlechterung der Produktqualität führt. Diese Reaktion wird beispielsweise als ursächlich für die Ausbildung des sogenannten "beany taste" der Sojaproteine angenommen. Um den Lufteintrag in Dekantem zu vermindern und die Trennleistung aufrecht zu erhalten, werden den zu zentrifugierenden Suspensionen häufig Entschäumer zugesetzt. Diese bewirken eine Verringerung der Oberflächenspannung und damit eine geringere Schaumbildung. Ihr Einsatz führt aber letztlich dazu, dass die bei der Zentrifugation abgetrennten Fasern neben den produkteigenen unerwünschten Inhaltsstoffen und den während der Extraktion gebildeten Oxidationsprodukte auch noch die zugesetzten Entschäumer enthalten. Die anschließend getrockneten Fasern sind daher als diätetische Ballaststoffe nicht oder nur sehr beschränkt verwendbar, da sie einen starken Eigengeschmack und eine sandige Struktur aufweisen, wobei die sandige Struktur auch durch ein feineres Vermahlen der Fasern nicht zu beseitigen ist.

Mit kleiner werdenden Partikelgrößen nimmt aber die Trennfähigkeit der Fasern von den gelösten Proteinen durch Zentrifugieren ab. Zudem geht mit sehr kleinen Partikelgrößen das Wasserbindungsvermögen der Fasern verloren.

Beispielsweise durch die US 6,284,292 ist vorgeschlagen worden, den Nachteilen der starken Quellung und der Bindung der verschiedenen Stoffe an die Fasern dadurch zu begegnen, dass die Faserstruktur mit Hilfe von Enzymen aufgebrochen wird. Dabei werden Enzyme eingesetzt, die die gesamte Kohlenhydratmatrix angreifen, also auch die für die Gewinnung von diätetischen Ballaststoffen wichtigen Zellulosefasern. Bei dem bekannten Verfahren reduzieren die Enzyme auch die Viskosität der Suspension während der alkalischen Extraktion. Damit wird die anschließende Trennbarkeit der gelösten Proteine von den Feststoffen durch Ultrafiltration verbessert.

Aus der EP 0 479 596 A1 ist es bekannt, die alkalische Extraktion der Proteine durch Einsatz von Eiweiß- und Kohlenhydrat-spaltenden Enzymen zu unterstützen. Die damit einhergehende Viskositätssenkung erlaubt es, mit höheren Feststoffkonzentrationen zu arbeiten. Die Trennung der Proteine von den Feststoffen erfolgt hier durch Zentrifugieren.

Aus der EP 0 700 641 A2 ist eine Aufreinigung von bereits koagulierten Proteinen durch eine Alkoholextraktion bekannt Anschließend werden die gereinigten Partikel in Wasser aufgenommen und mechanisch durch Scherkräfte bis auf 1 bis 14 µm zerkleinert. Die zerkleinerte Suspension wird einer alkalischen Extraktion unterworfen, bei der zusätzlich Proteasen zum Einsatz kommen, um die Proteingröße unter 8.000 g/mol zu bringen, bei der eine Trennung durch Zentrifugieren nicht mehr möglich ist.

Der klassische Weg, ein Proteinisolat von einer Faserfraktion durch alkalische Extraktion und anschließende Zentrifugation zu trennen, wird beispielsweise in der EP 0 859 553 B1, der WO 00/49887 oder der WO 99/17619 beschrieben. Die hierbei anfallende Faserfraktion ist mit den bereits beschriebenen Nachteilen behaftet und nur begrenzt als diätetischer Ballaststoff einsetzbar.

Aus der US 5,508,172 ist ein Verfahren zur enzymatischen Modifizierung von diätetischem Fasermaterial, insbesondere einem Sojabohnenfasermaterial bekannt, bei dem die sensorischen Eigenschaften einschl. der Sandigkeit dadurch verbessert werden, dass die Fasern in einer wässrigen Suspension mit einer Mischung einer Zellulase und einer Carbohydrase hydrolysiert werden. Das Maß der Hydrolyse soll so gewählt werden, dass es ausreichend ist, die sensorischen Eigenschaften des Fasermaterials zu verbessern ohne den Anteil an diätetischen Fasern wesentlich zu verringern.

Der Erfindung liegt die Aufgabe zugrunde, ein Verfahren aufzuzeigen, das zur simultanen Gewinnung eines Proteinisolats und einer Faserfraktion aus einer faser- und proteinhaltigen Ausgangssubstanz in der Lage ist, wobei neben dem Proteinisolat auch die Faserfraktion In einer Qualität gewonnen wird, die den unmittelbaren Einsatz in Lebensmitteln ermöglicht Insbesondere soll die Faserfraktion ein hohes Wasserbindungsvermögen aufweisen, aber dennoch geschmacksneutral sein.

Erfindungsgemäß wird diese Aufgabe dadurch gelöst, dass ein Verfahren zur Gewinnung eines Proteinisolats und einer Faserfraktion aus einer faser- und proteinhaltigen Ausgangssubstanz die Merkmale des Patentanspruchs 1 aufweist.

Vorteilhafte Ausführungsformen des erfindungsgemäßen Verfahrens sind in den Unteransprüchen 2 bis 11 beschrieben.

Bei dem neuen Verfahren erfolgt eine Oberflächenvergrößerung der Partikel vor der alkalischen Extraktion der Proteine. Diese Oberflächenvergrößerung tritt durch die Kombination einer Quellung der Fasern in den Partikeln mit Scherkräften ein, die auf die Partikel einwirken und diese mechanisch zerkleinern. Die Zerkleinerung der Partikel erfolgt definiert so, dass durch moderne industrielle Zentrifugationstechniken nach der alkalischen Extraktion der Proteine eine Abtrennung der ungelösten Fasern durch Zentrifugieren noch möglich ist. Die für die Abtrennung durch Zentrifugieren noch nutzbaren kleinsten Partikelgrößen sind gleichzeitig so groß, dass das Wasserbindungsvermögen der Faserfraktion als Ballaststoff nicht beeinträchtigt ist. Die Rückhaltefähigkeit von Proteinen und anderen Begleitstoffen in den Kapillaren der Fasern Ist aber bereits reduziert. Da gleichzeitig durch die Überwachung des pH-Werts der Suspension während des Quellens der Faser eine Denaturierung der Proteine verhindert wird, binden diese nicht stärker an die Fasern an. Bevorzugt ist es, wenn die Quellung der Proteine unter Einwirkung der Scherkräfte bei einem pH-Wert erfolgt, der um ca. 0,6 oberhalb des isoelektrischen Punkts der Proteine bleibt. Unterhalb dieses pH-Werts tritt ein Grad an Denaturierung ein, der die Proteine fester in den und an die Fasern bindet Wenn der pH-Wert hingegen viel stärker angehoben wird, tritt eine Strukturveränderung der Fasern auf, bei der eine Tendenz zur Assoziierung an die gelösten Proteine besteht, was für die gewünschte Trennung der Fasern von den Proteinen ebenfalls nachteilig ist. Einzuhalten ist in jedem Fall, dass die Quellung der Fasern in einem pH-Bereich erfolgt, der um nicht mehr als +/- 2 von dem natürlichen pH-Wert der unbehandelten Ausgangssubstanz abweicht. Bevorzugt ist eine engere Grenze von weniger als +/- 1,0, um eine unerwünschte Denaturierung der Proteine und eine ebensolche Strukturveränderung der Fasern zu verhindern. Ein pH-Bereich, in dem das neue Verfahren gut funktioniert, liegt zwischen 5,0 und 6,5. Durch die während des Quellens der Fasern auf die Partikel einwirkenden Scherkräfte wird die Extraktionsfähigkeit und die Abtrennbarkeit der Proteine von den Fasern deutlich verbessert. Dies scheint auf eine Strukturveränderung zurückzuführen zu sein, die über die mechanische Zerkleinerung der Partikel hinausgeht. Die Scherkräfte während des Quellens der Fasern können durch alle bekannten Arten von Homogenisiertechniken, wie beispielsweise Koloidmühlen, Ultraschall, Rotor-Stator-Systeme, Hochdruckdesintegration usw. aufgebracht werden. Wichtig ist, dass die Scherkräfte eine ausreichende Größe haben, die sich typischerweise dadurch dokumentiert, dass die Partikel in der Suspension unter Einwirkung der Scherkräfte tatsächlich zerkleinert werden, auch wenn sie eine Ausgangspartikelgröße von 150 µm oder weniger aufweisen. Die bei dem neuen Verfahren einzusetzenden Zentrifugationstechniken sind auf die Feinverteilung der Partikel abzustimmen. Geeignet ist beispielsweise ein handelsüblicher Dekanter, dem ein Separator nachgeschaltet ist, wobei der Dekanter den wesentlichen Anteil der Feststoffe abtrennt, so dass der Separator sich auf die Abtrennung der kleineren Partikel der Feststoffe konzentrieren kann und dabei mit nur geringen Feststoffmengen beaufschlagt wird. Besonders vorteilhaft ist der Einsatz eines sogenannten Prodekanters von der Firma Flottweg, Deutschland. Diese Vorrichtung baut ein einem Separator ähnliches Zentrifugalfeld auf und ist dennoch geeignet, höhere Feststoffkonzentrationen kontinuierlich zu verarbeiten.

Die Temperatur der Suspension während des Quellens wird vorzugsweise in einem Bereich von 40 bis 60 °C gehalten. Besonders bevorzugt ist der Temperaturbereich von 45 bis 55 °C, d.h. etwa 50 °C. Die Zeitdauer des Quellens ist über das Ergebnis der Quellung abzustimmen. Mindestens sollte die Quellung der Fasern mehr als 50 % der maximalen Wasseraufnahme der Fasern erreicht haben, bevor der ph-Wert der Suspension in den alkalischen Bereich angehoben wird. Vorzugsweise beträgt die Quellung mehr als 75 % der maximalen Quellung.

Dies wird unter Einwirkung der Scherkräfte während des Quellens typischerweise über einen Zeitraum von 10 bis 60 min. erreicht. In aller Regel sind etwa 20 min., d.h. 15 bis 25 min. für ein sehr gutes Quellergebnis ausreichend.

Während des Quellens sollten die Partikel vorzugsweise durch die Scherkräfte auf eine Feinverteilung mit einer mittleren Teilchengröße von 80 bis 100 µm in massegewichteten Mittel zerkleinert werden. Hierauf kann dann noch der Einsatz weiterer Scherkräfte, die auf die Partikel mit den bereits gequollenen Fasern einwirken, folgen, wobei diese Scherkräfte größer als die Schwerkräfte während des Quellens sein sollten. Solche größeren Scherkräfte können beispielsweise durch Hochdruckdesintegration über eine Druckdifferenz von mindestens 80 bar, vorzugsweise von mindesten 100 bar aufgebracht werden. In Folge der gesamten Scherkräfte werden die Partikel mit den gequollenen Fasern vorzugsweise auf eine mittlere Teilchengröße von unter 80 µm in massegewichteten Mittel zerkleinert. Ideal ist es, wenn die Partikel vor dem Anheben des pH-Werts der Suspension in den alkalischen Bereich Teilchengrößen im Bereich von 10 bis 100 µm aufweisen. Dies sollte zumindest für 80 Gewichts-%, vorzugsweise für mindestens 90 Gewichts-% der Partikel der Fall sein.

Ein gutes Indiz für eine erfolgreiche Vorbehandlung der faser- und proteinhaltigen Ausgangssubstanz bei dem neuen Verfahren ist es, wenn das mit 1000 xg binnen 5 min. sedimentierbare Volumen der Suspension bei 10 Gewichts-% Trockensubstanz mit den gesamten Scherkräften auf 20 bis 60 Volumen-%, vorzugsweise 30 bis 60 Volumen-%, angehoben wurde.

Das neue Verfahren ist sehr proteinschonend, da auf erhöhte Temperaturen sowohl bei der Vorbehandlung als auch bei der alkalischen Extraktion verzichtet werden kann. Als Nachteil ist dabei jedoch zu sehen, dass in der Ausgangssubstanz enthaltene natürliche Enzyme wie Phenoloxidasen und Trypsin-Inhibitoren nur geringfügig inaktiviert werden. Gleichzeitig ergibt sich durch die vergrößerte Oberfläche der Partikel auch eine verbesserte Angriffsfähigkeit auf die mit den Proteinen vergesellschafteten Lipide und Phenole in der alkalischen Extraktion durch Oxidation. Diese kann jedoch dadurch unterbunden werden, dass die alkalische Extraktion in der Gegenwart eines Reduktionsmittels durchgeführt wird. Als besonders geeignet erweist sich dabei Natriumsulfit (Na₂SO₃). Das Reduktionsmittel unterbindet die Autooxidation und verhindert die unerwünschten Reaktionsprodukte. Die Einsatzkonzentration des Natirumsulfits beträgt typischerweise 0,25 bis 2 g je kg Protein.

Aufgrund der Feinverteilung der Partikel in der Suspension kann die Zeitdauer der alkalischen Extraktion bei dem neuen Verfahren auch deutlich unter 30 min. reduziert werden, wie sie bei der Extraktion von gröberen Partikeln notwendig ist. In dem bevorzugten alkalischen Bereich des pH-Werts von 9 bis 10 sind Extraktionszeiten von maximal 15 min. realisierbar. Diese kurzen Extraktionszeiten reduzieren auch die Tendenz zur Autooxidation.

Um die gewünschte Feinverteilung der Partikel in dem bevorzugten Bereich von unter 80 µm zu erzielen, können bei dem neuen Verfahren auch kohlenhydratspaltende Enzyme eingesetzt werden. Als geeignet erweisen sich Hemicellulasen, Pectinasen, Glucosidasen und Amylasen. Cellulasen sind hingegen für den Einsatz bei dem neuen Verfahren nicht geeignet. Sie führen vielmehr zu einer Beeinträchtigung der Struktur der Fasern, die ihre Trennbarkeit von den Proteinen und ihre Verwendung als Balaststoff beeinträchtigt. Die Enzyme werden vorzugsweise vor dem Ausüben der weiteren Scherkräfte auf die Partikel zugesetzt und anschließend wird eine Enzymreaktionszeit von 30 bis 120 min. abgewartet. Durch die Enzyme wird die Faserstruktur soweit geöffnet, dass mit einer geringeren Arbeit der Scherkräfte die erwünschte Feinverteilung der Partikel erreicht wird.

Das neue Verfahren ist insgesamt sowohl bezüglich der Ausbeute als auch der Funktionalität der erzeugten Produkte äußerst effektiv. Zur Erfüllung von mikrobiologischen Anforderung der Lebensmittelindustrie an die Produkte des Verfahrens kann eine Pasteurisierung sowohl des gewonnenen Proteinisolats als auch der Faserfraktion erfolgen. Die Pasteurisierung am Ende des Verfahrens hat dabei den Vorteil, dass das Produkt bei der Erhitzung frei von unerwünschten Begleitstoffen ist, was jede thermisch angeregte Wechselwirkung der Begleitstoffe mit den Inhaltsstoffen unterbindet. Den möglicherweise bestehenden Nachteil einer stärkeren Kontaminierung der zur Durchführung des Verfahrens eingesetzten Vorrichtungen über längere Produktionszeiten steht die Schnelligkeit der Extraktion, die verbesserte Funktionalität der Produkte und die erhöhte Wertschöpfung durch die Gewinnung von Proteinisolat und Fasern als diätetischer Ballaststoff gegenüber. Handelt es sich bei der eingesetzten Ausgangssubstanz jedoch um ein stark kontaminiertes Material, ist eine thermische Behandlung auch zu Beginn des Verfahrens möglich. Diese sollte allerdings vor der Quellung der Fasern unter Einwirkung der Scherkräfte erfolgen, da eine Erhitzung nach der Quellung eine dann unkontrollierte Partikelvergrößerung bewirkt.

Die schon grundsätzlich gute Ausbeute des neuen Verfahrens kann durch eine mehrstufige alkalische Extraktion verbessert werden, bei der die die Faserfraktion umfassenden Feststoffe, von der die die extrahierten Proteine enthaltende Flüssigphase separiert wurden, mindestens ein weiteres Mal alkalisch extrahiert wird und bei der eine die damit extrahierten Proteine enthaltende weitere Flüssigphase von den verbleibenden Feststoffen separiert wird. Diese weitere Flüssigphase kann zu der der zusätzlichen Extraktionsstufe vorhergehenden Extraktionsstufe zurückgeführt werden. So ist Natriumsulfit, das nur in der zweiten Extraktionsstufe von mehreren Extraktionsstufen zugegeben wird, in gewisser Konzentration auch in der ersten Extraktionsstufe anwesend und wirksam. Gleichzeitig entspricht eine von der ersten zur zweiten Extraktionsstufe zunehmende Konzentration an Natriumsulfit auch einer zunehmenden Gefahr einer Autooxidation der Proteine, wie sie auftritt, wenn in der zweiten Extraktionsstufe stärkere alkalische Bedingungen vorliegen als in der ersten, um zuvor noch nicht in Lösung gegangene Proteine doch noch von den Feststoffen abzulösen.

Eine mehrstufige alkalische Proteinextraktion ist grundsätzlich aus der DE 199 07 725 A1 bekannt. Hier wird jedoch immer mindestens eine Protease im Gegenstrom zu dem Feststoff geführt. Bei dem hier beschriebenen neuen Verfahren muss überhaupt keine Protease Verwendung finden. Dennoch kann durch eine Protease die Ausbeute des neuen Verfahrens und damit die Reinigung der Faserfraktion von den anhaftenden Proteinen noch weiter verbessert werden. Dabei kann ausgehend von einer beispielsweise dreistufigen Proteinextraktion mindestens eine Protease in der dritten Extraktionsstufe zugesetzt werden, um die nicht allein alkalisch von den Feststoffen abzulösenden Proteine in Lösung zu bringen. Häufig handelt es sich bei den besonders stark an die Fasern gebundenen Proteine um hydrophobe Proteine. Im Detail kann der Überlauf der dritten Separation nach seiner Entsalzung direkt getrocknet oder dem Überlauf der ersten Separation oder einem daraus ausgefällten Proteinquark zugeführt werden, statt ihn zu einer vorhergehenden Proteinextraktion zurückzuführen, so dass die Enzymbehandlung auf die letzte Extraktionsstufe beschränkt bleibt, und die Protease nicht zu einer unerwünschten Hydrolyse der Proteine in den vorherigen Extraktionsstufen führt.

Konkret können auch hydrophobe, stark an die Fasermatrix gebundene Proteine in der letzten Extraktionsstufe durch den Zusatz einer neutralen oder alkalischen Protease bei einem pH-Wert von 9 bis 11, vorzugsweise von ca. 10, soweit hydrolysiert werden, dass sie mit der Flüssigphase von den Fasern separierbar sind. Dabei werden die noch gebundenen Proteine in mittel- bis kurzkettigfe Peptide gespalten. Der pH-Wert der Feststoffdispersion fällt parallel um 2 bis 3 Einheiten. Nach einer Reaktionszeit von 10 bis 20 Minuten wird die Dispersion dann mit Säure auf einen pH-Wert von ca. 6,5 eingestellt und durch Wasserdampfinjektion kurzzeitig auf 90 bis 100 °C erhitzt, um die Enzymaktivität zu beseitigen. Nach Abkühlung der Dispersion auf unter 50 °C wird durch Zentrifugation aufgetrennt, wonach die als Feststoff verbleibende Faserfraktion weitgehend frei von möglicherweise allergieauslösenden Proteinen ist.

Die Erfindung wird im Folgenden anhand von Beispielen näher erläutert und beschrieben, dabei zeigt
- Fig. 1: den Ablauf des neuen Verfahrens als Blockdiagramm,
- Fig. 2: ein detaillierteres Blockdiagramm der alkalischen Extraktion und der Separation bei dem Verfahren gemäß Fig. 1.

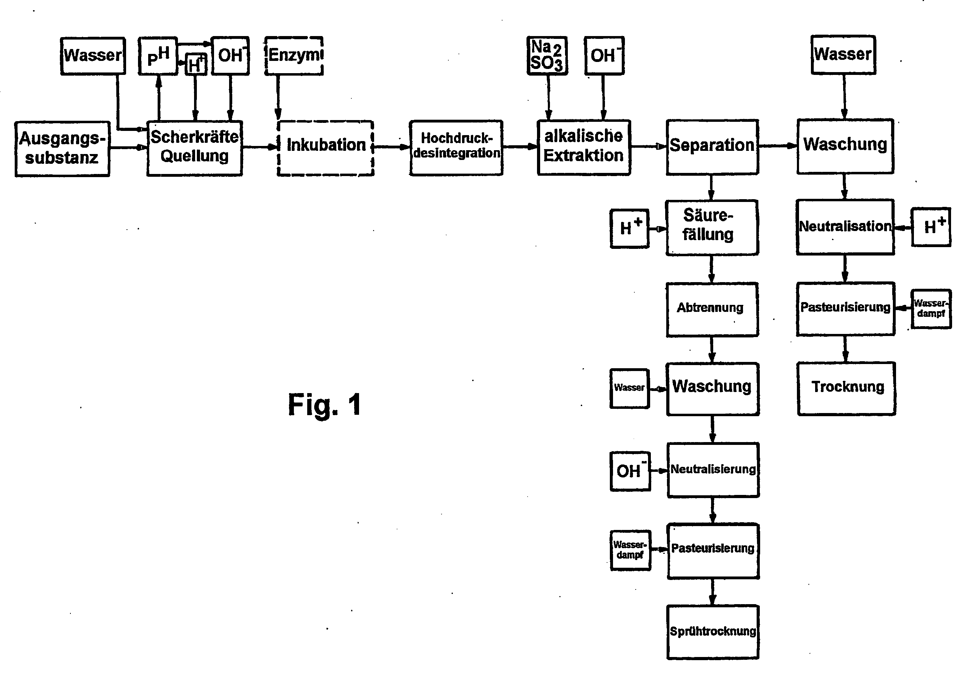

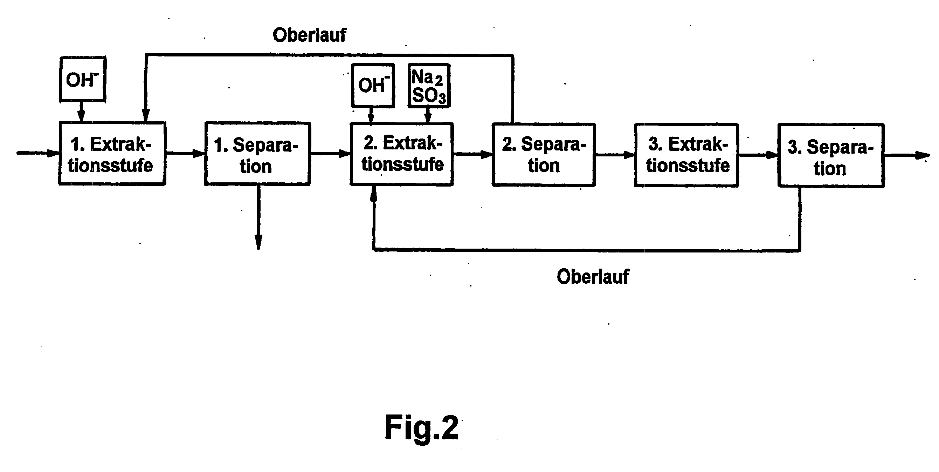

Bei dem aus den Fig. 1 und 2 hervorgehende Verfahren wird eine faser- und proteinhaltige Ausgangssubstanz mit Wasser unter Einwirkung von Scherkräften angemaischt. Dieser Vorgang dauert etwa 20 min. Dabei erfolgt eine Zerkleinerung unter Aufnahme von Wasser. Je nach Ausgangssubstanz werden Säure (H+) oder Lauge (OH-) so zugegeben, dass der pH-Wert der entstehenden Suspension oberhalb des isoelektrischen Punkts des Proteins bleibt. Idealerweise sollte dieser Wert zwischen pH 5 und 6,5 liegen. Die Temperatur der Suspension während des Quellens liegt bei typischerweise 50 °C. Anschließend kann der Suspension ein Enzym zugesetzt werden. In diesem Fall ist eine Inkubation der Suspension, d.h. eine Enzymreaktionszeit von je nach Rohstoff 30 bis 120 min. abzuwarten. Anschließend wird durch Hochdruckdesintegration die Suspension homogenisiert, wobei starke Scherkräfte auf die Partikel in der Suspension einwirken und diese weiter zerkleinern. Wenn kein Einsatz von Enzymen vorangegangen ist, muss die Arbeit der Scherkräfte während der Hochdruckdesintegration regelmäßig größer sein als beim Einsatz eines Enzyms.

Anschließend erfolgt eine alkalische Extraktion der Proteine aus den zerkleinerten Partikeln der Ausgangssubstanz mit den gequollenen Fasern. Um dabei eine Autooxidation zu verhindern, wird in Wasser gelöstes Natriumsulfit so zugesetzt, dass eine Konzentration von 0,25 bis 2 g bezogen auf 1 kg Protein eingestellt wird. Für die alkalische Extraktion selbst wird der Suspension Lauge (OH-) zugesetzt. Anschließend erfolgt eine Separation der gelösten Proteine von den ungelösten Feststoffen mit Hilfe eines Prodekanters von der Firma Flottweg. Dabei kann die alkalische Extraktion mehrstufig sein und im Gegenstromverfahren erfolgen, wie in Fig. 2 näher dargestellt ist. Hierbei wird in drei aufeinanderfolgenden Extraktionsstufen mit jeweils nachfolgender Separation der pH-Wert und/oder die Temperatur zumindest einmal erhöht, um unter aggressiver werdenden alkalischen Bedingungen die Proteine in Lösung zu bringen. Dabei wird hier konkret die Lauge zu Beginn der ersten und zweiten Extraktionsstufe und das Natriumsulfit nur zu Beginn der zweiten Extraktionsstufe zugegeben. Die weiteren Extraktionsstufen werden über den Feststoffaustrag der vorhergehenden Separation bzw. aus dem Oberlauf nachfolgenden Separation mit Lauge bzw. Natriumsulfit versorgt. Bei der mehrstufigen Extraktion werden die Proteine immer nur den alkalischen Bedingungen ausgesetzt, die zu ihrer in Lösung Bringung notwendig sind. D.h., die leicht löslichen Proteine werden milder behandelt als die schwer löslichen. Insgesamt werden die Proteine damit so schonend wie möglich, d.h. mit so wenigen Denaturierungen wie möglich in Lösung gebracht. Eine mehrstufige alkalische Extraktion mit ansteigender Stärke der alkalischen Bedingungen ist aus der DE 199 07 725 A1 bekannt. Hier wird jedoch zusätzlich zu dem Alkali eine Protease im Gegenstrom geführt. Diese Protease ist hier bei dem neuen Verfahren nicht notwendig. Wenn hier Proteasen eingesetzt werden, so kann dies aber in einer dritten Extraktionsstufe erfolgen, die von den vorherigen Extraktionsstufen in sofern getrennt ist, dass der Überlauf ihrer Separation nicht in die vorherigen Extraktionsstufen zurückgeführt wird. Damit wirken die Proteasen selektiv nur in der dritten Extraktionsstufe, d.h. nur auf die bis dahin noch nicht alkalisch in Lösung gebrachten Proteine ein. Diese Verfahrensvariante wird durch das nachfolgende Beispiel 4 noch näher erläutert werden Die Extraktion des neuen Verfahrens erfolgt allgemein in einem pH-Bereich von 7 bis 12, insbesondere von 9 bis 10. Die Verteilung der Partikelgrößen bietet eine so große Angriffsfläche für die Lauge, dass eine Extraktionszeit von insgesamt unter 15 min. erreicht werden kann. Als ausreichend hat sich eine Extraktionszeit von ca. 10 min. erwiesen. Die Verkürzung der alkalischen Extraktion reduziert deutlich die Bildung von toxischen Aminosäuren, wie beispielsweise dem Lysinoalanin.

Mit der Separation gemäß Fig. 1 wird der Stoffstrom in zwei Teile aufgetrennt. Der linke Stoffstrom in Fig. 1 umfasst die Flüssigphase aus der Separation. Aus dieser werden durch Zugabe von Säure (H+) die Proteine an ihrem isoelektrischen Punkt ausgefällt, d.h. koaguliert. Es ist keine Erhitzung des Proteins im Rahmen der Säureausfällung erforderlich. Als nächstes wird das Protein als Proteinquark von der verbleibenden Flüssigphase abgetrennt. Dies erfolgt wie die Separation der Feststoffe von den gelösten Proteinen entweder durch eine Kombination eines Dekanters und eines Separators oder durch einen Prodekanter der Firma Flottweg. Andere Abtrenntechniken, wie beispielsweise Filtration, sind zwar realisierbar, aber kaum wirtschaftlich. Der gewonnene Proteinquark mit einer Feststoffkonzentration von 18 % bis 23 %, d.h. ca. 20 %, wird mit Wasser gewaschen. Das Waschwasser wird erneut abgetrennt. Mit ihm werden die in dem Proteinquark angesammelten Salze ausgewaschen. Anschließend wird der pH-Wert des Proteinquarks neutralisiert und zwar in dem Bereich von 6,5 bis 7. Der neutralisierte Proteinquark kann durch Dampfinjektion pasteurisiert werden. Hierfür ist er für maximal 2 min. auf ca. 80 °C zu erhitzen. Anschließend wird der Proteinquark wieder auf unter 50 °C abgekühlt. Danach kann eine Sprühtrocknung des gewonnenen Proteinisolats erfolgen. Die Funktionalität des Proteinisolats entspricht hinsichtlich aller gängigen Eigenschaften mindestens der gegenwärtig angebotenen Industrieware, mit dem zusätzlichen Vorteil einer sehr hohen Aufschlagfähigkeit und Schaumstabilität, die über den derzeit üblichen Industriestandard signifikant hinausgeht. Die Faserfraktion, die in der in der Separation von dem Protein abgetrennt wurde, wird mit Wasser gewaschen. Dann erfolgt eine Neutralisation mit Säure (H+). Anschließend wird eine Pasteurisierung mit Wasserdampf entsprechend der Pasteurisierung des Proteins vorgenommen. Abschließend erfolgt die Trocknung der Fasern, die in der so anfallenden Form als diätetische Ballaststoffe einsetzbar sind.

Weitere Details der Erfindung erschließen sich aus den folgenden konkreten Ausführungsbeispielen:

***Beispiel 1:*** Sojamehl des Typs "White Flakes" (Firma Cargill) wird in Wasser unter Einsatz eines Dissolvers homogenisiert, so dass der pH-Wert auf 5,5 und die Trockensubstanz auf ca. 12 % eingestellt sind. Die Temperatur des Homogenats beträgt 50 °C. Nach 15 min. wird das gequollene Homogenat mit einem Hochdruckdesintegrator bei 100 bar desintegriert. Das sedimentierbare Volumen einer 10 %igen Feststofflösung steigt dabei von 25 % auf 45 % an. Dieses Homogenat wird dann mittels Natronlauge unter Rühren auf einen pH-Wert von 9 eingestellt. Nach einer Verweilzeit von 10 min. wird die Suspension einem Prodekanter in einer Feststoffkonzentration von 8 bis 12 % zugeführt. Der Feststoffaustrag des Prodekanters wird mit Wasser und einem Rücklauf der nachfolgenden Extraktionsstufe so zusammengeführt, dass der Feststoffgehalt der nachfolgenden Stufe bei ca. 6 % liegt. Der pH-Wert wird auf 9,5 eingestellt, und es werden 0,5 g. Natriumsulfit pro kg Protein gelöst in Wasser zugesetzt. Danach wird erneut zentrifugiert. Hieran kann sich eine dritte Extraktionsstufe anschließen. Dabei stellt sich der pH-Wert der faserhaltigen Fraktion auf 8,5 bis 9 ein. Durch Wasserzugabe wird der pH-Wert auf 8 abgesenkt. Sollte die Wasserzugabe allein nicht ausreichen, um den erforderlichen pH-Wert zu erreichen, kann mit Säure korrigiert werden. Aufgrund der folgenden Pasteurisierung und Trocknung sollte die Faserfraktion fließfähig, aber nicht zu wässrig sein. Der Ablauf der ersten Separation wird einem Koagulationstank zugeführt und mittels Salzsäure auf pH 4,4 eingestellt. Der sich dabei bildende Proteinquark wird durch intensives Rühren in Schwebe gehalten und über einen weiteren Prodekanter zentrifugiert. Zwischen Fällung und Zentrifugation sollten mindestens 10 min. liegen. Der Feststoffaustrag, der das Protein enthält, wird mit kaltem Wasser resuspendiert, wobei sich die Wassertemperatur auf 30 °C einstellt Diese Lösung wird erneut zentrifugiert. Der nunmehr anfallende Feststoff wird mittels Natronlauge auf pH 6,5 neutralisiert und mittels Dampfinjektion für 30 sek. auf 70 °C erhitzt. Im Durchlauf wird das Medium auf 50 °C abgekühlt und bis zur Trocknung durch einen Sprühturm gelagert. Nach Auswertung der so erhaltenen Produkte ergaben sich vor der Trocknung folgende Werte:

**Proteinisolat:**

| | |
|---|---|
| Proteinreinheit: | 92 % |
| Ausbeute: | 80 % |
| Funktionalitäten:: | Standardwerte industrieller Sojaisolate, mit extrem ausgeprägter Schaumbildungskapazität. |
| Sensorik: | Neutraler Geschmack |
| Farbe: | cremig weiß |
| Proteinlöslichkeit: | 95 % |

**Ballaststoff:**

| | |
|---|---|
| Partikelgröße: | < 100µm |
| Proteingehalt: | < 15 % auf TS |
| Wasserbindung: | 600 % |
| Farbe: | cremig weiß |
| Sensorik: | Neutraler Geschmack |

***Beispiel 2*:** GMO-freies Sojamehl vom Typ "White Flakes" (Firma Solbar) wird in Wasser so homogenisiert, dass ein Trockensubstanzgehalt von 20 % entsteht. Die Temperatur der Suspension beträgt 50 °C. Der pH-Wert wird mit Kalziumchlorid und Salzsäure auf pH 5,8 eingestellt. Zu dieser Suspension wird eine Mischung kohlenhydratspaltender Enzyme (keine Cellulasen) in einer Konzentration von 0,4 % auf Trockensubstanz hinzugegeben und über 90 min. gerührt. Nach dieser Enzymreaktionszeit wird die Suspension mit einem Hochdruckdesintegrator bei 150 bar (2000 psi) homogenisiert. Das sedimentierbare Volumen einer 10 %igen Feststofflösung steigt von 20 % auf 50 % an. Dieses Homogenat wird nunmehr mittels Natronlauge unter intensivem Rühren auf pH 9 eingestellt. Nach einer Verweilzeit von 10 min. wird die Suspension mit einer Feststoffkonzentration von 10 % einem Prodekanter zugeführt. Der Feststoffaustrag wird mit Wasser und einem Rücklauf der nachfolgenden Stufe so zusammengeführt, dass der Feststoffgehalt der nachfolgenden Stufe bei ca. 6 % liegt. Der pH-Wert wird auf 10,5 eingestellt, und es werden 0,5 g Natriumsulfit pro kg Protein gelöst in Wasser zugesetzt Danach wird zentrifugiert. Hieran kann sich eine dritte Extraktionsstufe anschließen. Dabei stellt sich der pH-Wert der faserhaltigen Fraktion auf 8,5 bis 9 ein. Durch Wasserzugabe wird der pH-Wert auf pH 8 gesenkt. Sollte die Wasserzugabe allein nicht ausreichen, den erforderlichen pH-Wert zu erreichen, kann mit Säure korrigiert werden. Aufgrund der nachfolgenden Pasteurisierung und Trocknung sollte die Faserfraktion fließfähig, aber nicht zu wässrig sein. Im Anschluss wird wie im Beispiel 1 verfahren. Das sich hiermit ergebende Isolat ist identisch mit dem Produkt aus Beispiel 1. Der Ballaststoff zeigt ein noch verbessertes Wasserbindungsvermögen und eine verbesserte Mundsensorik.

***Beispiel 3*:** Sojamehl des Typs "Toasted Flakes" (ADM) vermahlen auf 150 µm wird in Wasser so suspendiert, dass ein Trockensubstanzgehalt von ca. 20 % und ein pH-Wert von 5,5 eingestellt werden. Die Temperatur der Suspension beträgt 50 °C. Dieser Suspension werden 0,6 % einer angepassten Enzymmischung zugegeben und für 90 min. unter Rühren inkubiert. Anschließend wird die Suspension bei 200 bar Hochdruckdesintegriert. Das sedimentierbare Volumen einer 10 %igen Feststofflösung steigt von 30 auf 50 % an. Dieses Homogenat wird nun mit Natronlauge unter intensivem Rühren auf pH 10 eingestellt. Nach einer Verweilzeit von 12 min. wird die Suspension einem Prodekanter zugeführt. Der Feststoffaustrag wird mit Wasser und einem Rücklauf der nachfolgenden Separationsstufe so zusammengeführt, dass der Feststoffgehalt der nachfolgenden Stufe bei ca. 12 % liegt. Vor Zuführung zur nächsten Zentrifugation wird der pH-Wert auf pH 11 eingestellt, und es werden 1,5 g Natriumsulfit pro kg. Protein gelöst in Wasser zugegeben. An die zweite Zentrifugation kann sich eine dritte Extraktionsstufe anschließen. Dabei stellt sich der pH-Wert der abgetrennten faserhaltigen Fraktion auf 10 ein. Durch Wasser- und Säurenzugabe wird der pH-Wert auf pH 8 reduziert. Der Ablauf der ersten Prodekanterstufe wird einem Koagulationstank zugeführt und mittels Salzsäure auf pH 4,4 eingestellt. Der sich dabei bildende Quark wird durch intensives Rühren in Schwebe gehalten und erneut über einen weiteren Prodekanter zentrifugiert. Zwischen Fällung und Zentrifugation liegen 10 min. Der Feststoffaustrag, der das Protein enthält, wird mit kaltem Wasser resuspendiert, wobei sich die Wassertemperatur bei etwa 30 °C einstellt. Diese Suspension wird zentrifugiert. Der nunmehr anfallende Feststoff wird mittels Natronlauge auf pH 6,8 neutralisiert und mittels Dampfinjektion auf 80 °C erhitzt. Im Durchlauf wird das Medium nach ca. 30 sek. auf 50 °C abgekühlt und bis zur Trocknung durch einen Sprühturm gelagert. Die so erhaltenen Produkte wiesen folgende Daten auf:

**Proteinisolat:**

| | |
|---|---|
| Proteinreinheit: | 90 % |
| Ausbeute: | 76 % |
| Funktionalitäten: | Standardwerte industrieller Sojaisolate, mit extrem |
| | ausgeprägter Schaumbildungskapazität. |
| Sensorik: | Neutraler Geschmack |
| Farbe: | Cremig weiß |
| Proteinlöslichkeit: | 85 % |

**Ballaststoff:**

| | |
|---|---|
| Partikel: | < 100µm |
| Proteingehalt: | < 16 % auf TS |
| Wasserbindung: | 400 % |
| Farbe: | cremig weiß |
| Sensorik: | Neutraler Geschmack |

***Beispiel 4:*** Sojamehl des Typs "White Flakes" (Firma Cargill) wird zunächst wie in Bespiel 1 behandelt. Abweichend von der Vorgehensweise in Bespiel 1 wird nach der zweiten Zentrifugation bei dem pH-Wert von 9,5 der pH-Wert des Feststoffaustrags mit wässriger Lauge auf 10 eingestellt. Die damit erhaltene Suspension des Feststoffs sollte bei guter Dispergierbarkeit einen Feststoffgehalt von 6 bis 10 % und eine Temperatur von 40 bis 50 °C aufweisen. Zu dieser Dispersion wird mindestens eine Protease so zugesetzt, dass die Konzentration an Enzym 1 % bzw. 0,025 Anson Units bezogen auf 1 kg Protein der Dispersion beträgt. Nach Zugabe der Protease reagiert die Dispersion für 20 Minuten ohne pH-Korrektur. Innerhalb dieser Zeit fällt der pH-Wert auf 7,5 bis 8. Anschließend wird der pH-Wert mit Säure weiter auf 6,5 abgesenkt, und die Dispersion wird durch Wasserdampfinjektion für 45 Sekunden auf 90 bis 100 °C erhitzt. Nach Abkühlen auf 50 °C wird die Dispersion zentrifugiert. Die dabei abgetrennte Faserfraktion kann direkt einer Trocknung zugeführt werden, und sie enthält einen allergenarmen Ballaststoff. Der Überlauf wird gesondert gesammelt, nicht zu der vorherigen Extraktionsstufe zurückgeführt, sondern beispielsweise nach Entsalzung ebenfalls direkt getrocknet oder vor dessen Trocknung dem Proteinquark zugegeben, der gemäß Beispiel 1 aus dem Überlauf der ersten Zentrifugation ausgefällt wurde. Aus dem letzteren Vorgehen resultieren die folgenden Werte:

**Proteinisolat:**

| | | |
|---|---|---|
| Proteinreinheit: | | 91 % |
| Ausbeute: | | 92 % |
| Funktionalitäten: | Standardwerte industrieller Sojaisolate, mit extrem | |
| | ausgeprägter Schaumbildungskapazität. | |
| Sensorik: | Neutraler Geschmack | |
| Farbe: | Cremig weiß | |
| Proteinlöslichkeit: | 98 % | |

**Ballaststoff:**

| | |
|---|---|
| Partikel: | < 100µm |
| Proteingehalt: | < 5 % auf TS |
| Wasserbindung: | 600 % |
| Farbe: | cremig weiß |
| Sensorik: | Neutraler Geschmack |

## Patentansprüche

1. Verfahren zur Gewinnung eines Proteinisolats und einer Faserfraktion aus einer faser- und proteinhaltigen Ausgangssubstanz, mit den Schritten:
- Überführen von Partikeln der Ausgangssubstanz in eine wässrige Suspension,
- Ausüben von Scherkräften, die eine mechanische Zerkleinerung der Partikel in der Suspension bewirken, über einen Zeitraum von mindestens 10 Minuten, während die Fasern in den Partikeln durch Wasseraufnahme quellen,
- Überwachen des pH-Werts der Suspension während des Quellens der Fasern und Halten des pH-Werts in einem nicht-alkalischen pH-Bereich, der über dem isoelektrischen Punkt der Proteine liegt und um nicht mehr als 2 von dem natürlichen pH-Wert der unbehandelten Ausgangssubstanz abweicht, gegebenenfalls durch Zugabe von Säuren und/oder Laugen,
- ohne dass während des Quellens der Fasern eine Protease anwesend ist,
- anschließendes Anheben des pH-Werts der Suspension mit den gequollenen Fasern in den alkalischen Bereich, um an den Fasern anhaftende Proteine alkalisch in Lösung zu bringen, wobei die Partikel mit den gequollenen Fasern eine Feinverteilung mit einer mittleren Teilchengröße von 10 bis 150 µm im massegewichteten Mittel aufweisen, und
- Separieren einer die extrahierten Proteine enthaltenden Flüssigphase von den darin suspendierten, die Faserfraktion umfassenden Feststoffen, durch Zentrifugieren.

2. Verfahren nach Anspruch 1, **dadurch gekennzeichnet, dass** der pH-Wert der Suspension während des Quellens der Fasern in einem pH-Bereich gehalten wird, der um weniger als 1,0 von dem natürlichen pH-Wert der unbehandelten Ausgangssubstanz abweicht und mindestens um 0,5 über den isoelektrischen Punkt der Proteine, vorzugsweise zwischen 5,0 und 6,5, liegt, und dass die Temperatur der Suspension während des Quellens der Fasern in einem Bereich von 40 bis 60 °C, vorzugsweise von 45 bis 55 °C, gehalten wird.

3. Verfahren nach einem der Ansprüche 1 und 2, **dadurch gekennzeichnet, dass** der pH-Wert der Suspension nicht eher in den alkalischen Bereich angehoben wird, als dass die Quellung der Fasern mehr als 50 %, vorzugsweise mehr als 75 %, der maximalen Wasseraufnahme der Fasern erreicht hat.

4. Verfahren nach einem der Ansprüche 1 bis 3, **dadurch gekennzeichnet, dass** die Scherkräfte während des Quellens der Fasern über einen Zeitraum von bis zu 60 Minuten, vorzugsweise von 15 bis 25 Minuten, ausgeübt werden.

5. Verfahren nach einem der Ansprüche 1 bis 4, **dadurch gekennzeichnet, dass** die Partikel während des Quellens durch die Scherkräfte auf eine Feinverteilung mit einer mittleren Teilchengröße von 80 bis 100 µm im massegewichteten Mittel zerkleinert werden, dass vor dem Anheben des pH-Werts der Suspension in den alkalischen Bereich weitere Scherkräfte auf die Partikel mit den bereich gequollenen Fasern ausgeübt werden, die größer als die Scherkräfte während des Quellens sind, und dass die Partikel mit den gequollenen Fasern durch die gesamten Scherkräfte im massegewichteten Mittel auf eine mittlere Teilchengröße von unter 80 µm im massegewichteten Mittel zerkleinert werden, wobei die Teilchengrößen zu mindestens 80 Gewichts-%, vorzugsweise mindestens 90 Gewichts-%, zwischen 10 und 100 µm liegen.

6. Verfahren nach Anspruch 5, **dadurch gekennzeichnet, dass** das mit 1000 xg binnen 5 Minuten sedimentierbare Volumen der Suspension bei 10 Gewichts-% Trockensubstanz mit den gesamten Scherkräften auf 20 bis 60 Volumen-%, vorzugsweise 30 bis 60 Volumen-%, angehoben wird.

7. Verfahren nach einem der Ansprüche 1 bis 6, **dadurch gekennzeichnet, dass** die alkalische Extraktion der Proteine in Gegenwart von Natriumsulfit durchgeführt wird, dessen Konzentration vorzugsweise 0,25 bis 2 Gramm je Kilogramm Protein beträgt.

8. Verfahren nach einem der Ansprüche 1 bis 7, **dadurch gekennzeichnet, dass** die alkalische Extraktion bei einem pH-Wert von 7 bis 12, vorzugsweise von 9 bis 10, binnen maximal 15 Minuten durchgeführt wird.

9. Verfahren nach Anspruch 5, **dadurch gekennzeichnet, dass** vor dem Ausüben der weiteren Scherkräfte auf die Partikel mit den bereits gequollenen Fasern der Suspension mindestens ein kohlenhydratspaltendes, cellulasefreies Enzym zugesetzt und eine Enzymreaktionszeit von 30 bis 120 Minuten abgewartet wird.

10. Verfahren nach einem der Ansprüche 1 bis 9, **dadurch gekennzeichnet, dass** die die Faserfraktion umfassenden Feststoffe, von der die die extrahierten Proteine enthaltende Flüssigphase separiert wurden, mindestens einer weiteren alkalischen Proteinextraktion mit anschließender Separation einer die damit extrahierten Proteine enthaltenden weiteren Flüssigphase unterworfen werden, wobei die nach der weiteren Proteinextraktion ' separierte weitere Flüssigphase zu der ihr vorhergehenden Proteinextraktion zurückgeführt wird.

11. Verfahren nach Anspruche 10, **dadurch gekennzeichnet, dass** in einer letzten von mehreren aufeinanderfolgenden Proteinextraktionen mindestens eine Protease eingesetzt wird, wobei die die damit extrahierten Proteine enthaltende weitere Flüssigphase nicht zu einer vorhergehenden Proteinextraktion zurückgeführt wird.

## Claims

1. A method for obtaining a protein isolate and a fiber fraction from a fibrous and proteinaceous starting substance, comprising the steps:
- converting particles of the starting substance into an aqueous suspension,
- applying shearing forces which cause a mechanical comminution of the particles in the suspension over a period of at least 10 minutes, while the fibers in the particles swell owing to water uptake,
- monitoring the pH of the suspension during the swelling of the fibers and maintaining the pH in a non-alkaline pH range which is above the isoelectric point of the proteins and deviates by no more than 2 from the natural pH of the untreated starting substance, if appropriate by adding acids and/or alkalis,
- without a protease being present during the swelling of the fibers,
- subsequently elevating the pH of the suspension having the swollen fibers to the alkaline range to bring proteins adhering to the fibers into solution under alkaline conditions, the particles having the swollen fibers having a fine distribution having a mean particle size of from 10 to 150 µm as weight average, and
- separating by centrifugation a liquid phase comprising the extracted proteins from the solids suspended therein and comprising the fiber fraction.

2. The method of claim 1, **characterized in that** the pH of the suspension during the swelling of the fibers is maintained in a pH range which deviates by less that 1.0 from the natural pH of the untreated starting substance and is at least 0.5 above the isoelectric point of the proteins, preferably between 5.0 and 6.5, and that the temperature of the suspension during the swelling of the fibers is maintained in a range from 40 to 60°C, preferably from 45 to 55°C.

3. The method of one of claims 1 and 2, **characterized in that** the pH of the suspension is not elevated to the alkaline range before the swelling of the fibers has reached more than 50%, preferably more than 75%, of the maximum water absorption of the fibers.

4. The method of one of claims 1 to 3, **characterized in that** the shearing forces during the swelling of the fibers are applied over a period of up to 60 minutes, preferably from 15 to 25 minutes.

5. The method of one of claims 1 to 4, **characterized in that** the particles during the swelling are comminuted by the shearing forces to a fine distribution having a mean particle size of from 80 to 100 µm on a weight average, that, before elevating the pH of the suspension to the alkaline range, further shearing forces are applied to the particles having the previously swollen fibers which shearing forces are greater than the shearing forces during the swelling, and that the particles having the swollen fibers are comminuted by the entire shearing forces to a weight-average mean particle size of less than 80 µm on a weight average, at least 80% by weight, preferably at least 90% by weight, of the particle sizes being between 10 and 100 µm.

6. The method of one claim 5, **characterized in that** the volume of a 10% by weight dry matter suspension which can be sedimented at 1000 xg within 5 minutes is elevated by the entire shearing forces from 20 to 60% by volume, preferably from 30 to 60% by volume.

7. The method of one of claims 1 to 6, **characterized in that** the alkaline extraction of the proteins is carried out in the presence of sodium sulfite, the concentration of which is from 0.25 to 2 grams per kilogram of protein.

8. The method of one of claims 1 to 7, **characterized in that** the alkaline extraction is carried out at a pH of from 7 to 12, preferably from 9 to 10, within a maximum of 15 minutes.

9. The method of claim 8, **characterized in that**, before the application of the further shearing forces to the particles having the previously swollen fibers, at least one carbohydrate-cleaving cellulase-free enzyme is added to the suspension and an enzyme reaction time of from 30 to 120 minutes is allowed.

10. The method as claimed in one of claims 1 to 9, **characterized in that** the solids comprising the fiber fraction from which the liquid phase comprising the extracted proteins has been separated are subjected to at least one further alkaline protein extraction with subsequent separation of a further liquid phase comprising the resultant extracted proteins, the further liquid phase separated after the further protein extraction being recirculated to the protein extraction preceding it.

11. The method of claim 10, **characterized in that**, in a last protein extraction of a plurality of sequential protein extractions, at least one protease is used, the further liquid phase comprising the resultant extracted proteins not being recirculated to a preceding protein extraction.

## Revendications

1. Procédé permettant d'obtenir un isolat de protéine et une fraction fibreuse à partir d'une substance de départ contenant des fibres et des protéines, comprenant les étapes consistant à :
- transférer des particules de la substance de départ dans une suspension aqueuse,
- exercer des forces de cisaillement assurant un broyage mécanique des particules dans la suspension pendant une durée d'au moins 10 minutes tandis que les fibres dans les particules gonflent en absorbant de l'eau,
- surveiller le pH de la suspension pendant le gonflement des fibres et maintenir le pH dans une plage de pH non alcaline qui se situe au-delà du point isoélectrique des protéines et qui ne s'écarte pas de plus de 2 du pH naturel de la substance de départ non traitée, le cas échéant par l'ajout d'acides et/ou de bases,
- sans qu'une protéase soit présente pendant le gonflement des fibres,
- puis relever le pH de la suspension avec les fibres gonflées dans la plage alcaline afin de dissoudre en conditions alcalines les protéines adhérant aux fibres, les particules avec les fibres gonflées présentant une division fine avec une taille de particules moyenne de 10 à 150 µm en moyenne pondérée en masse, et
- séparer par centrifugation une phase liquide contenant les protéines extraites d'avec les solides comprenant la fraction fibreuse en suspension dans ladite phase liquide.

2. Procédé selon la revendication 1, **caractérisé en ce que**, pendant le gonflement des fibres, le pH de la suspension est maintenu dans une plage de pH qui s'écarte de moins de 1,0 du pH naturel de la substance de départ non traitée et qui est supérieur d'au moins à 0,5 au point isoélectrique des protéines, de préférence compris entre 5,0 et 6,5, et **en ce que** la température de la suspension pendant le gonflement des fibres est maintenue dans une plage de 40 à 60°C, de préférence de 45 à 55°C.

3. Procédé selon l'une des revendications 1 et 2, **caractérisé en ce que** le pH de la suspension n'est pas relevé dans la plage alcaline tant que le gonflement des fibres n'a pas atteint plus de 50 %, de préférence plus de 75 %, de l'absorption d'eau maximale des fibres.

4. Procédé selon l'une des revendications 1 à 3, **caractérisé en ce que** les forces de cisaillement sont exercées pendant le gonflement des fibres pendant une durée allant jusqu'à 60 minutes, de préférence de 15 à 25 minutes.

5. Procédé selon l'une des revendications 1 à 4, **caractérisé en ce que**, pendant le gonflement, les particules sont broyées par les forces de cisaillement à une division fine avec une taille de particule moyenne de 80 à 100 µm en moyenne pondérée en masse, **en ce que**, avant de relever le pH de la suspension dans la plage alcaline, d'autres forces de cisaillement supérieures aux forces de cisaillement appliquées pendant le gonflement sont exercées sur les particules avec les fibres déjà gonflées, et **en ce que** les particules avec les fibres gonflées sont broyées par l'ensemble des forces de cisaillement à une taille de particule moyenne inférieure à 80 µm en moyenne pondérée en masse, les tailles de particules se situant à au moins 80 % en poids, de préférence à au moins 90 % en poids, dans la plage de 10 à 100 µm.

6. Procédé selon la revendication 5, **caractérisé en ce que** le volume de la suspension sédimentable à 1000 x g en 5 minutes à 10 % en poids de matière sèche est augmenté avec l'ensemble des forces de cisaillement à 20 à 60 % en volume, de préférence à 30 à 60 % en volume.

7. Procédé selon l'une des revendications 1 à 6, **caractérisé en ce que** l'extraction alcaline des protéines se fait en présence de sulfite de sodium dont la concentration se situe de préférence dans la plage de 0,25 à 2 grammes par kilogramme de protéine.

8. Procédé selon l'une des revendications 1 à 7, **caractérisé en ce que** l'extraction alcaline se fait à un pH allant de 7 à 12, de préférence de 9 à 10, en 15 minutes au maximum.

9. Procédé selon la revendication 5, **caractérisé en ce que**, avant d'exercer les autres forces de cisaillement sur les particules avec les fibres déjà gonflées, au moins une enzyme exempte de cellulase et dissociant les hydrates de carbone est ajoutée à la suspension et la réaction enzymatique est laissée à se dérouler pendant une durée de 30 à 120 minutes.

10. Procédé selon l'une des revendications 1 à 9, **caractérisé en ce que** les solides comprenant la fraction fibreuse dont la phase liquide contenant les protéines extraites a été séparée sont soumis à au moins une autre extraction alcaline de protéines, suivie d'une séparation d'avec une autre phase liquide contenant les protéines extraites, l'autre phase liquide séparée après cette extraction de protéines supplémentaire étant renvoyée vers l'extraction de protéines qui l'a précédé.

11. Procédé selon la revendication 10, **caractérisé en ce qu'**une protéase au moins est utilisée dans une dernière extraction de protéines parmi plusieurs extractions de protéines consécutives, l'autre phase liquide contenant les protéines ainsi extraites n'étant pas renvoyée vers une extraction de protéines précédente.
